# EUROPÄISCHE PATENTSCHRIFT

(11) **EP 3 234 418 B1**
(45) Veröffentlichungstag und Bekanntmachung des Hinweises auf die Patenterteilung: **17.07.2019**
(21) Anmeldenummer: 15817169.4
(22) Anmeldetag: 15.12.2015
(51) Int. Cl.: F16J 15/3228, B25J 19/00, B25J 21/00, F16J 15/3204, F16J 15/3284

(54) **INDUSTRIEROBOTER ZUM BEWEGEN IN EINEM REINRAUM**
INDUSTRIAL ROBOT FOR MOVING IN A CLEAN ROOM
ROBOT INDUSTRIEL ET PROCÉDÉ POUR DÉPLACER UN BRAS DE ROBOT DANS UNE SALLE BLANCHE

(30) Priorität: 16.12.2014 DE 102014226144
(43) Veröffentlichungstag der Anmeldung: 25.10.2017
(73) Patentinhaber: KUKA Deutschland GmbH, 86165 Augsburg (DE)
(72) Erfinder: GROLL, Christoph, 86169 Augsburg (DE); ZASCHE, Moritz, 86163 Augsburg (DE)
(74) Vertreter: Ege Lee & Partner Patentanwälte PartGmbB
(86) Internationale Anmeldenummer: PCT/EP2015/079807
(87) Internationale Veröffentlichungsnummer: WO 2016/096866

(56) Entgegenhaltungen:
- WO-A2-2013/156851
- DE-A1- 10 348 841
- DE-A1-102010 062 629
- DE-T2- 69 937 495

## Beschreibung

Die Erfindung betrifft einen Industrieroboter aufweisend eine Robotersteuerung, die ausgebildet ist, ein Roboterprogramm auszuführen, sowie aufweisend einen Roboterarm mit mehreren Gliedern, die über Gelenke verbunden sind, die zum automatischen gegeneinander Verstellen der Glieder gemäß dem Roboterprogramm ausgebildet sind, wobei wenigstens eines der Gelenke als ein Drehgelenk ausgebildet ist, welches ein erstes Glied der mehreren Glieder mit einem benachbarten zweiten Glied der mehreren Glieder zum Drehen relativ zueinander verbindet.

Aus der DE 103 48 841 A1 ist ein Mehrachs-Industrieroboter bekannt, bei dem ein erstes von zwei relativ zueinander drehbaren Teilen als ein Gehäuseteil eines Getriebes des Mehrachs-Industrieroboters ausgebildet ist und ein zweites Teil aus dem Gehäuseteil austritt, und zwar in Form einer Antriebs- oder Abtriebswelle als zweites Teil. Diese Vorrichtung mit mindestens zwei relativ zueinander drehbaren Teilen weist zwischen den relativ zueinander drehbaren Teilen eine Dichtung auf, wobei zwischen den relativ zueinander drehbaren Teilen mindestens eine weitere Dichtung angeordnet ist. Zumindest eine der Dichtungen ist aus Polytetraflourethylen (PTFE) ausgebildet.

Die WO 2013/156851 A2 beschreibt eine Gelenkarmvorrichtung für Reinräume, wobei eine Welle gegen eine Öffnung in den Reinraum mittels einer Dichtung abgedichtet ist und wenigstens ein Gelenk der Gelenkarmvorrichtung eine Gelenksdichtung aus PTFE aufweist.

Die DE 699 37 495 T2 beschreibt eine allgemeine Wellendichtung, wobei die Wellendichtung wenigstens eine Dichtungsscheibe aus PTFE aufweist.

Aufgabe der Erfindung ist es, einen Industrieroboter zu schaffen, welcher in Reinräumen eingesetzt werden kann, insbesondere in Reinräumen der Reinraumklasse ISO 1 eingesetzt werden kann.

Die Aufgabe der Erfindung wird gelöst durch Industrieroboter aufweisend eine Robotersteuerung, die ausgebildet ist, ein Roboterprogramm auszuführen, sowie aufweisend einen Roboterarm mit mehreren Gliedern, die über Gelenke verbunden sind, die zum automatischen gegeneinander Verstellen der Glieder gemäß dem Roboterprogramm ausgebildet sind, wobei wenigstens eines der Gelenke als ein Drehgelenk ausgebildet ist, welches ein erstes Glied der mehreren Glieder mit einem benachbarten zweiten Glied der mehreren Glieder zum Drehen relativ zueinander verbindet und wobei das erste Glied einen Wellendichtring aufweist, der eine Dichtlippe aus einem PTFE-Werkstoff (Polytetrafluorethylen-Werkstoff) umfasst und das zweite Glied einen Wellenabschnitt aufweist, der eine Lauffläche aus einem PTFE-Werkstoff umfasst, an welcher der Wellendichtring mit seiner Dichtlippe abdichtend anliegt, und wobei das zweite Glied einen Wellenabschnitt aufweist, der eine Lauffläche aus einem POM-PTFE-Copolymer-Werkstoff umfasst.

Industrieroboter sind Arbeitsmaschinen, die zur automatischen Handhabung und/oder Bearbeitung von Objekten mit Werkzeugen ausgerüstet werden können und mittels ihrer Gelenke in mehreren Bewegungsachsen beispielsweise hinsichtlich Orientierung, Position und Arbeitsablauf programmierbar sind.

Der Industrieroboter weist den Roboterarm und eine programmierbare Steuerung (Steuervorrichtung) auf, die während des Betriebs die Bewegungsabläufe des Industrieroboters steuert bzw. regelt, dadurch, dass ein oder mehrere automatisch oder manuell verstellbare Gelenke (Roboterachsen) durch insbesondere elektrische Antriebe oder Motoren bewegt werden, in dem die Steuerung die Antriebe gemäß eines Roboterprogramms automatisch oder in einem Handfahrbetrieb steuert bzw. regelt.

Roboterarme können unter anderem ein Gestell und ein relativ zum Gestell mittels eines Gelenks drehbar gelagertes Karussell umfassen, an dem eine Schwinge mittels eines anderen Gelenks schwenkbar gelagert ist. An der Schwinge kann dabei ihrerseits ein Armausleger mittels eines weiteren Gelenks schwenkbar gelagert sein. Der Armausleger trägt dabei eine Roboterhand, wobei insoweit der Armausleger und/oder die Roboterhand mehrere weitere Gelenke aufweisen können. Eines, mehrere oder alle Gelenke des Roboterarms können als Drehgelenke ausgebildet sein.

Der mehrere über Gelenke verbundene Glieder aufweisende Roboterarm kann als ein Knickarmroboter mit mehreren seriell nacheinander angeordneten Gliedern und Gelenken konfiguriert sein, insbesondere kann der Roboterarm als ein Sechsachs-Knickarmroboter ausgebildet sein. Eines, mehrere oder alle Gelenke des Knickarmroboters können als Drehgelenke ausgebildet sein.

Der Industrieroboter kann ein oder mehrere Drehgelenke aufweisen, welche jeweils mit einer Drehgelenksspalt-Dichtungsanordnung ausgestattet ist, welche Drehgelenksspalt-Dichtungsanordnung durch einen erfindungsgemäßen Wellendichtring, der eine Dichtlippe aus einem PTFE-Werkstoff umfasst und eine zugehörige erfindungsgemäße Lauffläche aus einem PTFE-Werkstoff, an welcher der Wellendichtring mit seiner Dichtlippe abdichtend anliegt, gebildet wird.

Generell kann ein einzelnes Gelenk des Roboterarms demgemäß eine erfindungsgemäße Drehgelenksspalt-Dichtungsanordnung aufweisen oder zwei oder mehrere, insbesondere auch alle Gelenke des Roboterarms können jeweils eine erfindungsgemäße Drehgelenksspalt-Dichtungsanordnung aufweisen. Eine erfindungsgemäße Drehgelenksspalt-Dichtungsanordnung eines Gelenks ist repräsentativ für jegliche Gelenke des Roboterarms im Folgenden näher beschrieben.

Der erfindungsgemäße Industrieroboter ist zum Betreiben innerhalb eines Reinraums ausgebildet. Reinräume sind gegenüber der Umwelt zumindest staubdicht abgeschlossene Arbeitsbereiche, in denen Gegenstände unter besonders staubarmer Umgebung gefertigt und/oder montiert werden sollen. Reinräume bieten die Möglichkeit die Kontamination durch luftgetragene Partikel innerhalb des Reinraums gering zu halten und/oder zu reduzieren.

Mit der Kontamination durch luftgetragene Partikel befasst sich beispielsweise die Europäische Norm EN ISO 14644, welche u.a. eine Klassifizierung der Luftreinheit enthält. In einem Reinraum wird definitionsgemäß die Konzentration luftgetragener Partikel geregelt. Der Reinraum ist dazu so konstruiert und verwendet, dass die Anzahl der in den Reinraum eingeschleppten bzw. im Reinraum entstehenden Partikel kleinstmöglich gehalten wird. Dabei können andere reinheitsrelevante Parameter, wie Temperatur, Feuchte und/oder Druck geregelt werden.

Wenn Gegenstände nicht manuell, sondern automatisiert innerhalb eines solchen Reinraums gefertigt und/oder montiert werden sollen, können Industrieroboter vorgesehen werden. Dazu müssen die Industrieroboter jedoch hinsichtlich der besonderen Bedingungen des Reinraums ausgebildet sein, insbesondere dahingehend, dass der Industrieroboter den Reinraum so wenig wie möglich mit Partikeln kontaminiert, also gemäß den Anforderungen aus der Norm EN ISO 14644 die Anzahl der durch den Industrieroboter im Reinraum entstehenden Partikel kleinstmöglich gehalten wird. Partikel, die der Industrieroboter üblicherweise innerhalb des Reinraums erzeugen und abgeben kann, sind Abriebpartikel, welche insbesondere im Bereich der Gelenke des Industrieroboters, vorzugsweise an Drehgelenken des Industrieroboters erzeugt und abgeben werden, indem gegeneinander verstellbare Bauteile, wie zwei benachbarte Glieder eines Drehgelenks des Roboterarms aneinander schleifen, wodurch die Abriebpartikel erzeugt und in den Reinraum eingetragen würden.

Erfindungsgemäß ist deshalb vorgesehen, dass das erste Glied einen Wellendichtring aufweist, der eine Dichtlippe aus einem PTFE-Werkstoff umfasst und das zweite Glied einen Wellenabschnitt aufweist, der eine Lauffläche aus einem PTFE-Werkstoff umfasst, an welcher der Wellendichtring mit seiner Dichtlippe abdichtend anliegt, wodurch die Entstehung von Abriebpartikeln minimiert ist und dadurch die Anzahl von luftgetragenen Partikeln in einem Reinraum, in dem der Roboterarm angeordnet ist, kleinstmöglich gehalten werden kann. Mittels der allgemeinen erfindungsgemäßen Ausgestaltung eines Industrieroboters, insbesondere mittels einer einzelnen oder einer beliebig kombinierten Ausführungsform einer oder mehrerer der im Folgenden beschriebenen Ausführungsvarianten kann ein Industrieroboter geschaffen werden, welcher in Reinräumen insbesondere des Klassifizierungsgrades ISO-Klasse 1 (EN ISO 14644) auf zulässige Weise betrieben werden kann.

In einer speziellen Ausführungsform kann das zweite Glied einen Wellenabschnitt aufweisen, der eine Lauffläche aus einem POM-PTFE-Copolymer-Werkstoff (Polyoxymethylen-Polytetrafluorethylen-Copolymer-Werkstoff) umfasst. Die Lauffläche aus dem POM-PTFE-Copolymer-Werkstoff kann auf einem Wellenabschnitt einer Stahlwelle aufgebracht sein. Wahlweise kann die Lauffläche als ein von dem zweiten Glied, das den Wellenabschnitt aufweist, separates Bauteil hergestellt und auf dem Wellenabschnitt befestigt sein oder als eine zunächst fließfähiges Material, wie eine Flüssigkeit oder ein Pulver bzw. Granulat auf den Wellenabschnitt aufgetragen und darauf verfestigt sein. Aufgrund seiner Materialeigenschaften kann der aufgebrachte POM-PTFE-Copolymer-Werkstoff beispielsweise spanend bearbeitet, insbesondere abgetragen werden. Durch eine solche spanende Bearbeitung kann eine äußere Mantelwand der Lauffläche besonders formgenau gefertigt werden, insbesondere auch die Oberflächenrauhigkeit auf die Dichtlippe des Wellendichtrings abgestimmt werden.

So kann in einer ersten Variante der Erfindung die Lauffläche von einer äußeren Mantelwand eines Laufflächenringes gebildet wird, der auf dem Wellenabschnitt des zweiten Gliedes befestigt ist. Ein solcher Laufflächenring kann zunächst separat von dem zweiten Glied bzw. separat von dem Wellenabschnitt des zweiten Glieds gefertigt werden. Der Laufflächenring kann vollständig bzw. ausschließlich aus dem PTFE-Werkstoff oder dem POM-PTFE-Copolymer-Werkstoff hergestellt sein. Alternativ kann der Laufflächenring einen Kern aus einem anderen Material aufweisen und mit einer Mantelwand aus dem PTFE-Werkstoff oder dem POM-PTFE-Copolymer-Werkstoff versehen sein. Generell kann der Laufflächenring mit unterschiedlichsten Fügeverfahren auf dem Wellenabschnitt des zweiten Gliedes befestigt sein.

In einer speziellen Art des Fügens kann der Laufflächenring durch Fügen, insbesondere thermisches Fügen auf dem Wellenabschnitt befestigt sein. Ein Fügen des Laufflächenrings auf den Wellenabschnitt des zweiten Gliedes kann insbesondere ein Kleben oder Schweißen sein.

In einer alternativen Art des Fügens kann der Laufflächenring durch Pressfügen, insbesondere Aufschrumpfen auf den Wellenabschnitt befestigt sein. So kann der Laufflächenring beispielsweise durch Längspressen, d.h. axiales Aufschieben bzw. Aufpressen auf den Wellenabschnitt des zweiten Gliedes kraftschlüssig auf dem Wellenabschnitt festgesetzt werden.

Alternativ zu einem Längspressen, kann der Laufflächenring auch durch Querpressen auf dem Wellenabschnitt festgesetzt werden. Beim Querpressen kann der Wellenabschnitt abgekühlt und/oder der Laufflächenring erwärmt werden, so dass der Laufflächenring unter geringem Kraftaufwand auf den wellenabschnitt aufgeschoben werden kann. Anschließen erfolgt ein Temperaturausgleich, durch den sich eine Pressung des Laufflächenrings auf dem Wellenabschnitt einstellt, wodurch der Laufflächenring auf dem Wellenabschnitt festgesetzt ist. Speziell in den Ausführungsformen eines aufzumontierenden separaten Laufflächenrings kann der Laufflächenring aus einem POM-PTFE-Copolymer-Werkstoff hergestellt sein. Ist der Laufflächenring aus einem POM-PTFE-Copolymer-Werkstoff hergestellt, so kann insbesondere die Dichtlippe des Wellendichtrings aus einem POM-freien PTFE-Werkstoff, insbesondere einem PTFE-Monomerwerkstoff hergestellt sein.

Alternativ zu einem Fügen eines Laufflächenrings auf den Wellenabschnitt kann die Lauffläche auch eine durch Beschichten, insbesondere Pulverbeschichten des Wellenabschnitts des zweiten Glieds mit einem PTFE-Material, insbesondere einem PTFE-Pulver oder einem PTFE-Pulvergemisch, auf dem Wellenabschnitt aufgebrachte PTFE-Schicht sein. Im Falle einer Pulverbeschichtung kann PTFE-Pulver auf dem Wellenabschnitt aufgetragen und durch Sintern verfestigt werden. Alternativ zum Pulverbeschichten kann die Lauffläche aus PTFE auch in einem Nasslack-Spritzverfahren aufgetragen werden.

In allen beschriebenen, geeigneten Varianten von erfindungsgemäßen Ausführungsarten kann die Dichtlippe des Wellendichtrings und die Lauffläche aus demselben PTFE-Werkstoff bzw. POM-PTFE-Copolymer-Werkstoff bestehen, d.h. hergestellt sein.

Die Dichtlippe des Wellendichtrings kann generell eine zugfederlose Dichtlippe sein. Indem die Dichtlippe des Wellendichtrings eine zugfederlose Dichtlippe ist, kann eine besonders abriebfeste Dichtungsanordnung geschaffen werden, bei der die Dichtlippe nur unter geringer Vorspannung, insbesondere ohne bzw. nahezu ohne Vorspannung, d.h. Vorspannkraft auf der Lauffläche dichtend aufliegt. Wenn die Dichtlippe ohne bzw. nahezu ohne Vorspannung, d.h. Vorspannkraft auf der Lauffläche dichtend aufliegt, wird die Dichtlippe und/oder die Lauffläche besonders gering abgenutzt und es kann nur äußerst wenig Abrieb entstehen, wodurch die durch die Bewegungen des Roboterarms in einem Reinraum eingetragenen Partikel besonders gering bleiben.

So kann der Wellendichtring beispielsweise ein Membranwellendichtring sein.

Der Wellendichtring und/oder die Lauffläche können eine grundlegende Dichtungsanordnung des jeweiligen Drehgelenks des Roboterarms bilden. Alternativ können die Drehgelenke des Roboterarms mit an sich bekannten Dichtungsanordnungen ausgeführt sein, wobei dann eine erfindungsgemäße Dichtungsanordnung, d.h. eine Paarung von erfindungsgemäßem Wellendichtring und Lauffläche an separaten Gehäusekapseln ausgebildet sein können und derartige Gehäusekapseln außenseitig, die an sich bekannte Dichtungsanordnung des jeweiligen Drehgelenkes überdeckend, an dem Roboterarm aufgesetzt angeordnet sind. Indem derartige Gehäusekapseln außenseitig, die an sich bekannte Dichtungsanordnung des jeweiligen Drehgelenkes überdeckend, an dem Roboterarm aufgesetzt angeordnet werden, können an sich bereits bekannte, insbesondere für Reinraumanwendungen zunächst nicht geeignete Roboterarme erfindungsgemäß reinraumtauglich nachgerüstet werden.

Neben der beschriebenen Ausbildung einer Dichtungsanordnung mit erfindungsgemäßen Wellendichtringen und Laufflächen, kann ein Eintrag von luftgetragenen Partikeln in einen Reinraum aufgrund eines Abriebs von Wellendichtringen und Laufflächen des Roboterarms weiter reduziert werden, indem das jeweilige Drehgelenk des Roboterarms maximal in einer Winkelgeschwindigkeit bewegt wird, bei welcher die Dichtlippe des Wellendichtrings sich mit einer Relativgeschwindigkeit zur Lauffläche bewegt, die kleiner als 1 Meter pro Sekunde (1 m/s) ist. Um dies zu erreichen, kann ein Roboterprogramm entsprechend programmiert sein, dass die erfindungsgemäßen Drehgelenke nur mit diesen reduzierten Winkelgeschwindigkeiten bewegt werden.

Alternativ oder ergänzend können die Antriebe des Roboterarms derart ausgelegt und/oder angesteuert sein, dass unabhängig des jeweiligen Roboterprogramms die Drehgelenke nur maximal in einer Winkelgeschwindigkeit angesteuert werden können, bei welcher die Dichtlippe des Wellendichtrings sich mit einer Relativgeschwindigkeit zur Lauffläche bewegt, die kleiner als 1 Meter pro Sekunde (1 m/s) ist.

Verschiedene Ausführungsbeispiele der Erfindung sind exemplarisch in den beigefügten schematischen Zeichnungen dargestellt. Konkrete Merkmale dieser Ausführungsbeispiele können unabhängig davon, in welchem konkreten Zusammenhang sie erwähnt sind, gegebenenfalls auch einzeln oder in Kombination betrachtet, allgemeine Merkmale der Erfindung darstellen.

Es zeigen:
- Fig. 1: eine perspektivische Ansicht eines Industrieroboters, der einen Roboterarm und eine Robotersteuerung aufweist,
- Fig. 2: eine Teilschnittdarstellung durch ein beispielhaftes Drehgelenk des Roboterarms gemäß Fig. 1, das einen erfindungsgemäßen Wellendichtring mit einer Dichtlippe aus einem PTFE-Werkstoff und einen vom Wellenabschnitt separaten Laufflächenring aus einem POM-PTFE-Copolymer-Werkstoff aufweist, und
- Fig. 3: eine Teilschnittdarstellung durch ein beispielhaftes Drehgelenk des Roboterarms gemäß Fig. 1, das einen erfindungsgemäßen Wellendichtring mit einer Dichtlippe aus einem PTFE-Werkstoff und eine Lauffläche in Form einer Beschichtung aus PTFE-Werkstoff aufweist.

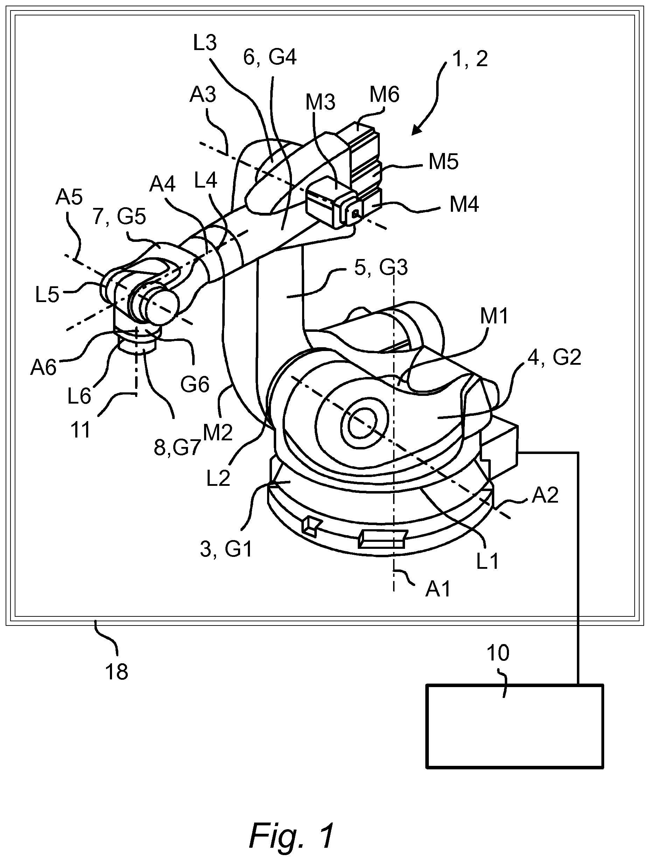

Die Fig. 1 zeigt einen Industrieroboter 1, der einen Roboterarm 2 und eine Robotersteuerung 10 aufweist. Der Roboterarm 2 umfasst im Falle des vorliegenden Ausführungsbeispiels mehrere, nacheinander angeordnete und mittels Gelenke L1 bis L6 drehbar miteinander verbundene Glieder G1 bis G7.

Die Robotersteuerung 10 des Industrieroboters 1 ist ausgebildet bzw. eingerichtet, ein Roboterprogramm auszuführen, durch welches die Gelenke L1 bis L6 des Roboterarms 2 gemäß des Roboterprogramms automatisiert oder in einem Handfahrbetrieb automatisch verstellt bzw. drehbewegt werden können. Dazu ist die Robotersteuerung 10 mit ansteuerbaren elektrischen Antrieben M1 bis M6 verbunden, die ausgebildet sind, die Gelenke L1 bis L6 des Industrieroboters 1 zu verstellen.

Bei den Gliedern G1 bis G7 handelt es sich im Falle des vorliegenden Ausführungsbeispiels um ein Gestell 3 und ein relativ zum Gestell 3 um eine vertikal verlaufende Achse A1 drehbar gelagertes Karussell 4. Weitere Glieder des Roboterarms 2 sind eine Schwinge 5, ein Armausleger 6 und eine vorzugsweise mehrachsige Roboterhand 7 mit einer als Flansch 8 ausgeführten Befestigungsvorrichtung zum Befestigen eines Werkzeugs 11. Die Schwinge 5 ist am unteren Ende, d.h. an dem Gelenk L2 der Schwinge 5, das auch als Schwingenlagerkopf bezeichnet werden kann, auf dem Karussell 4 um eine vorzugsweise horizontale Drehachse A2 schwenkbar gelagert.

Am oberen Ende der Schwinge 5 ist an dem ersten Gelenk L3 der Schwinge 5 wiederum um eine ebenfalls vorzugsweise horizontale Achse A3 der Armausleger 6 schwenkbar gelagert. Dieser trägt endseitig die Roboterhand 7 mit ihren vorzugsweise drei Drehachsen A4, A5, A6. Die Gelenke L1 bis L6 sind durch jeweils einen der elektrischen Antriebe M1 bis M6 über die Robotersteuerung 10 programmgesteuert antreibbar. Generell kann dazu zwischen jedem der Glieder G1 bis G7 und dem jeweils zugeordneten elektrischen Antrieb M1 bis M6 ein Getriebe 12 vorgesehen sein.

Die Fig. 1 zeigt demgemäß einen Industrieroboter 1 aufweisend eine Robotersteuerung 10, die ausgebildet ist, ein Roboterprogramm auszuführen, sowie aufweisend einen Roboterarm 2 mit mehreren Gliedern G1-G7, die über Gelenke L1-L6 verbunden sind, die zum automatischen gegeneinander Verstellen der Glieder G1-G7 gemäß dem Roboterprogramm ausgebildet sind, wobei wenigstens eines der Gelenke als ein Drehgelenk L1-L6 ausgebildet ist, welches ein erstes Glied 14 der mehreren Glieder G1-G7 mit einem benachbarten zweiten Glied 15 der mehreren Glieder G1-G7 zum Drehen relativ zueinander verbindet.

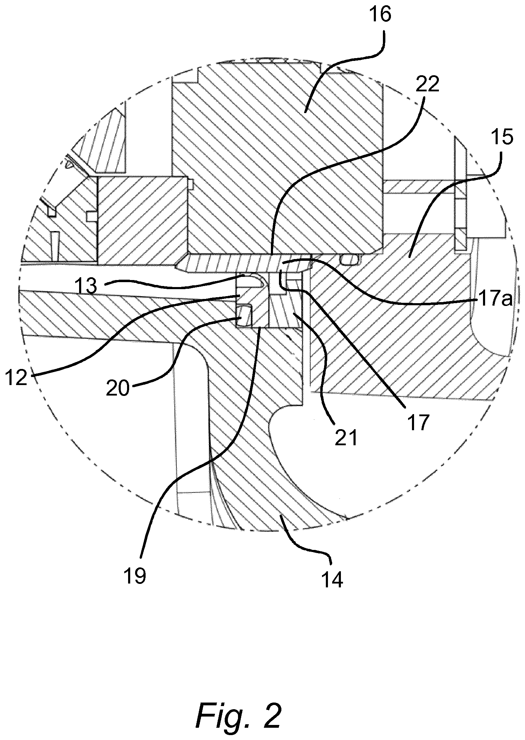

In Fig. 2 ist ein Drehgelenk des Roboterarms 2 gemäß Fig. 1 dargestellt, das an einem ersten Glied 14 des Roboterarms 2 einen erfindungsgemäßen Wellendichtring 12 mit einer Dichtlippe 13 aus einem PTFE-Werkstoff und an einem Wellenabschnitt 16 eines zweiten Glieds 15 einen separaten Laufflächenring 17a aus einem POM-PTFE-Copolymer-Werkstoff aufweist.

Das erste Glied 14 weist demgemäß also einen Wellendichtring 12 auf, der eine Dichtlippe 13 aus einem PTFE-Werkstoff umfasst, wobei das zweite Glied 15 einen Wellenabschnitt 16 aufweist, der eine Lauffläche 17 aus einem PTFE-Werkstoff umfasst, an welcher der Wellendichtring 12 mit seiner Dichtlippe 13 abdichtend anliegt.

Das erste Glied 14 wird von einem ersten Gehäusebauteil des Roboterarms 2 gebildet. Dieses erste Gehäusebauteil weist einen Sitz 19 für den Wellendichtring 12 auf. Der Wellendichtring 12 kann so auf den Sitz 19 aufgeschoben werden, und beispielsweise zwischen einem O-Ring 20 und einem Sicherungsring 21 axial und radial fixiert werden. Der Laufflächenring 17a ist auf einem Absatz 22 des Wellenabschnitts 16 befestigt. Der Wellenabschnitt 16 ist fest mit dem zweiten Glied 15 verbunden. Das zweite Glied 15 wird dabei von einem zweiten Gehäusebauteil des Roboterarms 2 gebildet.

Im Falle des vorliegenden Ausführungsbeispiels der Fig. 2 ist der Laufflächenring 17a und damit auch die Lauffläche 17 aus einem POM-PTFE-Copolymer-Werkstoff hergestellt.

Die Lauffläche 17 wird dabei von einer äußeren Mantelwand des Laufflächenringes 17a gebildet. Der Laufflächenring 17a ist auf dem Wellenabschnitt 16 des zweiten Gliedes 15 befestigt.

Der Laufflächenring 17a kann beispielsweise durch Fügen, insbesondere thermisches Fügen oder durch Pressfügen, insbesondere Aufschrumpfen auf dem Wellenabschnitt 16 befestigt sein.

Im Falle des vorliegenden Ausführungsbeispiels der Fig. 2 ist die Dichtlippe 13 des Wellendichtrings 12 eine zugfederlose Dichtlippe 13, insbesondere ein Membranwellendichtring.

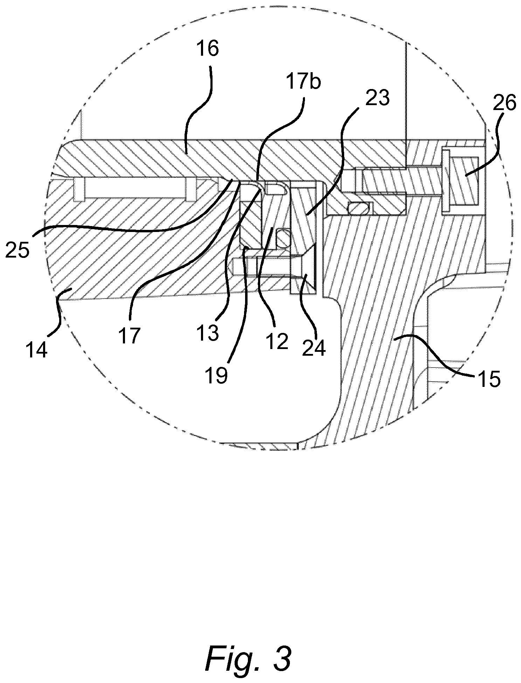

Im Falle des vorliegenden Ausführungsbeispiels der Fig. 2 ist die Dichtlippe 13 als eine Einzeldichtlippe ausgeführt. Im Falle des vorliegenden Ausführungsbeispiels der Fig. 2 kann die Dichtlippe 13 jedoch auch analog der folgend beschriebenen Ausführungsform gemäß Fig. 3 als eine Doppeldichtung ausgebildet sein.

In der dargestellten Ausführung der Fig. 2, in der das erste Glied 14 des Roboterarms 2 den Wellendichtring 12 mit einer Dichtlippe 13 aus einem PTFE-Werkstoff und das zweite Glied 15 an dem Wellenabschnitt 16 den separaten Laufflächenring 17a aus einem POM-PTFE-Copolymer-Werkstoff aufweist, kann der Industrieroboter 1 mittels seiner Robotersteuerung 10 zum Bewegen des in einem Reinraum 18 (Fig.1) angeordneten Roboterarms 2 derart angesteuert sein, dass ein automatisches Bewegen des wenigstens einen Drehgelenks maximal in einer Winkelgeschwindigkeit erfolgt, bei welcher die Dichtlippe 13 des Wellendichtrings 12 sich mit einer Relativgeschwindigkeit zur Lauffläche 17 bewegt, die kleiner als 1 Meter pro Sekunde (1 m/s) ist.

In Fig. 3 ist ein Drehgelenk des Roboterarms gemäß Fig. 1 dargestellt, das einen erfindungsgemäßen Wellendichtring 12 mit einer Dichtlippe 13 aus einem PTFE-Werkstoff und eine Lauffläche 17 in Form einer Beschichtung 17b aus PTFE-Werkstoff aufweist.

Auch in dieser alternativen Ausführungsform weist das erste Glied 14 einen Wellendichtring 12 auf, der eine Dichtlippe 13 aus einem PTFE-Werkstoff umfasst, wobei das zweite Glied 15 einen Wellenabschnitt 16 aufweist, der eine Lauffläche 17 aus einem PTFE-Werkstoff umfasst, welche als eine Beschichtung, d.h. PTFE-Schicht 17b ausgebildet ist, an welcher der Wellendichtring 12 mit seiner Dichtlippe 13 abdichtend anliegt.

Das erste Glied 14 wird auch in dieser Ausführungsform von einem ersten Gehäusebauteil des Roboterarms 2 gebildet. Dieses erste Gehäusebauteil weist einen Sitz 19 für den Wellendichtring 12 auf. Der Wellendichtring 12 kann so auf den Sitz 19 aufgeschoben werden, und beispielsweise zwischen einem O-Ring 20 und einem Sicherungsring 21 axial und radial durch einen Klemmring 23 fixiert werden, der stirnseitig mittels Schrauben 24 an das erste Glied angeschraubt ist. Die Beschichtung, d.h. die PTFE-Schicht 17b ist auf einem Oberflächenabschnitt 25 des Wellenabschnitts 16 aufgetragen. Der Wellenabschnitt 16 ist mittels weiterer Schrauben 26 fest, aber lösbar mit dem zweiten Glied 15 verbunden. Das zweite Glied 15 wird dabei von einem zweiten Gehäusebauteil des Roboterarms 2 gebildet.

Im Falle des vorliegenden Ausführungsbeispiels der Fig. 3 ist die Dichtlippe 13 als eine Doppeldichtung ausgeführt. Im Falle des vorliegenden Ausführungsbeispiels der Fig. 3 kann die Dichtlippe 13 jedoch auch analog der Ausführungsform gemäß Fig. 2 als eine Einzeldichtlippe ausgebildet sein.

Die Lauffläche 17 wird gemäß Fig. 3 durch Beschichten, insbesondere Pulverbeschichten des Wellenabschnitts 16 des zweiten Glieds 15 mit einem PTFE-Material, insbesondere einem PTFE-Pulver oder einem PTFE-Pulvergemisch erzeugt. Insoweit wird die Lauffläche 17 durch eine auf dem Wellenabschnitt 16 aufgebrachte PTFE-Schicht 17b gebildet.

Auch im Falle des Ausführungsbeispiels der Fig. 3 kann die Dichtlippe 13, bzw. die Doppeldichtlippe des Wellendichtrings 12 und die Lauffläche 17 bzw. die Beschichtung 17b aus demselben PTFE-Werkstoff bestehen.

Im Falle des vorliegenden Ausführungsbeispiels der Fig. 3 ist die Dichtlippe 13 des Wellendichtrings 12 auch eine zugfederlose Dichtlippe 13, insbesondere ein Membranwellendichtring.

In der dargestellten Ausführung der Fig. 3, in der das Drehgelenk des Roboterarms 2 eine Dichtlippe 13 aus einem PTFE-Werkstoff und eine Lauffläche 17 in Form einer Beschichtung 17b aus PTFE-Werkstoff aufweist, kann der Industrieroboter 1 mittels seiner Robotersteuerung 10 zum Bewegen des in einem Reinraum 18 (Fig.1) angeordneten Roboterarms 2 derart angesteuert sein, dass ein automatisches Bewegen des wenigstens einen Drehgelenks maximal in einer Winkelgeschwindigkeit erfolgt, bei welcher die Dichtlippe 13 des Wellendichtrings 12 sich mit einer Relativgeschwindigkeit zur Lauffläche 17 bewegt, die kleiner als 1 Meter pro Sekunde (1 m/s) ist.

## Patentansprüche

1. Industrieroboter aufweisend eine Robotersteuerung (10), die ausgebildet ist, ein Roboterprogramm auszuführen, sowie aufweisend einen Roboterarm (2) mit mehreren Gliedern (G1-G7), die über Gelenke verbunden sind, die zum automatischen gegeneinander Verstellen der Glieder (G1-G7) gemäß dem Roboterprogramm ausgebildet sind, wobei wenigstens eines der Gelenke als ein Drehgelenk (L1-L6) ausgebildet ist, welches ein erstes Glied (14) der mehreren Glieder (G1-G7) mit einem benachbarten zweiten Glied (15) der mehreren Glieder (G1-G7) zum Drehen relativ zueinander verbindet und wobei das erste Glied (14) einen Wellendichtring (12) aufweist, der eine Dichtlippe (13) aus einem PTFE-Werkstoff umfasst und das zweite Glied (15) einen Wellenabschnitt (16) aufweist, der eine Lauffläche (17) aus einem PTFE-Werkstoff umfasst, an welcher der Wellendichtring (12) mit seiner Dichtlippe (13) abdichtend anliegt, **dadurch gekennzeichnet, dass** das zweite Glied (15) einen Wellenabschnitt (16) aufweist, der eine Lauffläche (17) aus einem POM-PTFE-Copolymer-Werkstoff umfasst.

2. Industrieroboter nach Anspruch 1, bei dem die Lauffläche (17) von einer äußeren Mantelwand eines Laufflächenringes (17a) gebildet wird, der auf dem Wellenabschnitt (16) des zweiten Gliedes (15) befestigt ist.

3. Industrieroboter nach Anspruch 2, bei dem der Laufflächenring (17a) durch Fügen, insbesondere thermisches Fügen auf dem Wellenabschnitt (16) befestigt ist.

4. Industrieroboter nach Anspruch 2 oder 3, bei dem der Laufflächenring (17a) durch Pressfügen, insbesondere Aufschrumpfen auf den Wellenabschnitt (16) befestigt ist.

5. Industrieroboter nach einem der Ansprüche 1 bis 4, bei dem die Dichtlippe (13) des Wellendichtrings (12) und die Lauffläche (17) aus demselben PTFE-Werkstoff bestehen.

6. Industrieroboter nach einem der Ansprüche 1 bis 5, bei dem die Dichtlippe (13) des Wellendichtrings (12) eine zugfederlose Dichtlippe (13) ist.

7. Industrieroboter nach einem der Ansprüche 1 bis 6, bei dem der Wellendichtring (12) ein Membranwellendichtring ist.

## Claims

1. Industrial robot comprising a robot controller (10), which is configured to execute a robot program, and comprising a robot arm (2) with a plurality of links (G1-G7) connected by joints, the joints being configured for the automatic mutual adjustment of the links (G1-G7) according to the robot program, wherein at least one of the joints is designed as a rotary joint (L1-L6) which connects a first link (14) of the plurality of links (G1-G7) to an adjacent second link (15) for rotation relative to one another, and wherein the first link (14) has a shaft sealing ring (12) which comprises a sealing lip (13) made from a PTFE material and the second link (15) has a shaft section (16) which comprises a tread (17) made from a PTFE material, on which the sealing lip (13) of the shaft sealing ring (12) bears in a sealing manner, **characterised in that** the second link (15) has a shaft section (16) which comprises a tread (17) made from a POM-PTFE copolymer material.

2. Industrial robot according to claim 1, wherein the tread (17) is formed by an external casing wall of a tread ring (17a), which is fixed onto the shaft section (16) of the second link (15).

3. Industrial robot according to claim 2, wherein the tread ring (17a) is fixed onto the shaft section (15) by bonding, in particular thermal bonding.

4. Industrial robot according to claim 2 or 3, wherein the tread ring (17a) is fixed onto the shaft section (16) by compression-fit, in particular shrinking.

5. Industrial robot according to any of claims 1 to 4, wherein the sealing lip (13) of the shaft sealing ring (12) and the tread (17) are made from the same PTFE material.

6. Industrial robot according to any of claims 1 to 5, wherein the sealing lip (13) of the shaft sealing ring (12) is a sealing lip (13) without a tension spring.

7. Industrial robot according to any of claims 1 to 6, wherein the shaft sealing ring (12) is a membrane shaft sealing ring.

## Revendications

1. Robot industriel présentant une commande de robot (10) qui est réalisée pour exécuter un programme de robot, et présentant également un bras de robot (2) pourvu de plusieurs membres (G1-G7) qui sont reliés par des articulations qui sont réalisées pour déplacer automatiquement les membres (G1-G7) les uns par rapport aux autres conformément au programme de robot, au moins une des articulations étant réalisée sous la forme d'une articulation pivotante (L1-L6) qui relie un premier membre (14) de la pluralité de membres (G1-G7) à un deuxième membre (15) adjacent, de la pluralité de membres (G1-G7) pour qu'ils pivotent l'un par rapport à l'autre, et le premier membre (14) présentant une bague d'étanchéité pour arbre (12) qui comprend une lèvre d'étanchéité (13) en un matériau PTFE, et le deuxième membre (15) présentant un tronçon d'arbre (16) qui comprend une surface de roulement (17) en un matériau PTFE sur laquelle la bague d'étanchéité pour arbre (12) prend appui de manière étanche avec sa lèvre d'étanchéité (13), **caractérisé en ce que** le deuxième membre (15) présente un tronçon d'arbre (16) qui comprend une surface de roulement (17) en un matériau copolymère POM-PTFE.

2. Robot industriel selon la revendication 1, dans lequel la surface de roulement (17) est formée par une paroi enveloppe extérieure d'une bague de surface de roulement (17a) qui est fixée sur le tronçon d'arbre (16) du deuxième membre (15).

3. Robot industriel selon la revendication 2, dans lequel la bague de surface de roulement (17a) est fixée sur le tronçon d'arbre (16) par assemblage, en particulier par assemblage thermique.

4. Robot industriel selon la revendication 2 ou 3, dans lequel la bague de surface de roulement (17a) est fixée sur le tronçon d'arbre (16) par assemblage par pressage, en particulier par frettage.

5. Robot industriel selon l'une quelconque des revendications 1 à 4, dans lequel la lèvre d'étanchéité (13) de la bague d'étanchéité pour arbre (12) et la surface de roulement (17) sont réalisées dans le même matériau PTFE.

6. Robot industriel selon l'une quelconque des revendications 1 à 5, dans lequel la lèvre d'étanchéité (13) de la bague d'étanchéité pour arbre (12) est une lèvre d'étanchéité (13) sans tension par traction.

7. Robot industriel selon l'une quelconque des revendications 1 à 6, dans lequel la bague d'étanchéité pour arbre (12) est une bague d'étanchéité pour arbre à membrane.
